# EUROPEAN PATENT APPLICATION

(11) **EP 4 432 392 A1**
(43) Date of publication of application: **18.09.2024**
(21) Application number: 21963873.1
(22) Date of filing: 22.12.2021
(51) Int. Cl.: H01M 4/36

(54) **COMPOSITE LITHIUM NICKEL MANGANESE OXIDE POSITIVE ELECTRODE MATERIAL AND PREPARATION METHOD THEREFOR, AND LITHIUM ION BATTERY POSITIVE ELECTRODE PLATE**

(30) Priority: 09.11.2021 CN 202111319825
(71) Applicant: AESC Dynamics Technology (Jiangsu) Ltd., Wuxi, Jiangsu 214443 (CN); AESC Intelligent Innovation Dynamics Technology (Shanghai) Ltd., Shanghai 201315 (CN)
(72) Inventor: MO, Fangjie, Shanghai 200120 (CN); SUN, Huayu, Shanghai 200120 (CN)
(74) Representative: Becker, Eberhard
(86) International application number: PCT/CN2021/140525
(87) International publication number: WO 2023/082435

(57) **Abstract**

A composite lithium nickel manganese oxide positive electrode material and a preparation method therefor, and a lithium ion battery positive electrode plate. The composite lithium nickel manganese oxide positive electrode material comprises lithium nickel manganese oxide coated with a lithium ion conductor, wherein the mass ratio of the lithium ion conductor to the lithium nickel manganese oxide is (0.01-1):(99.99-99); the lithium ion conductor comprises a metal salt of lithium, and the lithium ion diffusion rate of the lithium ion conductor is greater than 10-5 mS/cm. The composite lithium nickel manganese oxide positive electrode material provided by the present application comprises the lithium ion conductor having lithium ion transmission performance, such that the migration rate of lithium ions is accelerated, the dynamic performance of the material is improved, and a direct-current internal resistance value of a battery is reduced.

## Description

### BACKGROUND

### Technical Field

The embodiments of the present application relate to the technical field of lithium ion batteries, for example, a composite lithium nickel manganese oxide positive electrode material, and in particular, to a composite lithium nickel manganese oxide positive electrode material, a preparation method thereof, and a lithium ion battery positive electrode plate.

### Description of Related Art

Spinel lithium nickel manganese oxide is used in the power battery system with high energy density due to its high reaction potential (>4.6 V) and high theoretical specific capacity (>140 mAh/g). However, since the reaction potential (>4.6 V) is excessively high, in order to reduce the side reaction between the positive electrode material and the electrolyte, the synthesized crystal grain size is large most of the time. This will slow down the migration of lithium ions inside the material, resulting in poor kinetic performance.

How to effectively improve the kinetic performance of the material, enhance the diffusion of lithium ions on the surface of the material, accelerate the migration rate of the lithium ions in the material, and reduce the direct-current (DC) internal resistance of the battery are technical problems that need to be solved for lithium nickel manganese oxide materials.

### SUMMARY

The following is a summary of the subject to be explained in detail in the specification. This summary is not intended to limit the scope of the claims.

In view of the deficiencies in the related art, the present application provides a composite lithium nickel manganese oxide positive electrode material, a preparation method thereof, and a lithium ion battery positive electrode plate capable of effectively improving the kinetic performance of a material and reducing the direct-current (DC) internal resistance of a battery by coating a lithium ion conductor with fast lithium ion data transmission performance on a surface.

In the first aspect, the present application provides a composite lithium nickel manganese oxide positive electrode material including lithium nickel manganese oxide coated with a lithium ion conductor.

A mass ratio of the lithium ion conductor to the lithium nickel manganese oxide is (0.01 to 1): (99.99 to 99).

The lithium ion conductor includes a metal salt of lithium, and a lithium ion diffusion rate of the lithium ion conductor is greater than 10⁻⁵ mS/cm.

The mass ratio of the lithium ion conductor to the lithium nickel manganese oxide is (0.01 to 1): (99.99 to 99), for example, is 0.01: 99.99, 0.1: 99.9, 0.2: 99.8, 0.5: 99.5, or 1: 99, but not limited to the listed values, and other unlisted values within the range of values are also applicable.

A lithium ion diffusion rate of the lithium ion conductor is greater than 10⁻⁵ mS/cm, for example, is 1.2×10⁻⁵ mS/cm, 2×10⁻⁵ mS/cm, 1×10⁻⁴ mS/cm, 1×10⁻³ mS/cm, or 1×10⁻² mS/cm, but not limited to the listed values, and other unlisted values within the range of values are also applicable.

The lithium ion conductor includes any one or a combination of at least two of Li₂WO₄, LiCoO₂, Li_{1.3}Al_{0.3}Ti_{1.7}(PO₄)₃, Li_{1.5}Al_{0.5}Ge_{1.5}(PO₄)₃, Li_{0.34}La_{0.56}TiO₃, Li_{6.5}La₃Zr_{1.5}Ta_{0.5}O₁₂, or Li_{6.5}La₃Zr_{1.5}Nb_{0.5}O₁₂. Typical but non-limiting combinations include a combination of Li₂WO₄ and LiCoO₂, a combination of Li_{1.3}Al_{0.3}Ti_{1.7}(PO₄)₃ and Li_{1.5}Al_{0.5}Ge_{1.5}(PO₄)₃, a combination of Li_{1.3}Al_{0.3}Ti_{1.7}(PO₄)₃ and Li_{0.34}La_{0.56}TiO₃, a combination of Li_{1.3}Al_{0.3}Ti_{1.7}(PO₄)₃ and Li_{6.5}La₃Zr_{1.5}Ta_{0.5}O₁₂, a combination of Li_{1.3}Al_{0.3}Ti_{1.7}(PO₄)₃ and Li_{6.5}La₃Zr_{1.5}Nb_{0.5}O₁₂, a combination of Li_{1.5}Al_{0.5}Ge_{1.5}(PO₄)₃ and Li_{0.34}La_{0.56}TiO₃, a combination of Li_{1.5}Al_{0.5}Ge_{1.5}(PO₄)₃ and Li_{6.5}La₃Zr_{1.5}Ta_{0.5}O₁₂, a combination of Li_{1.5}Al_{0.5}Ge_{1.5}(PO₄)₃ and Li_{6.5}La₃Zr_{1.5}Nb_{0.5}O₁₂, a combination of Li_{0.34}La_{0.56}TiO₃ and Li_{6.5}La₃Zr_{1.5}Ta_{0.5}O₁₂, a combination of Li_{6.5}La₃Zr_{1.5}Ta_{0.5}O₁₂ and Li_{6.5}La₃Zr_{1.5}Nb_{0.5}O₁₂, a combination of Li_{1.3}Al_{0.3}Ti_{1.7}(PO₄)₃, Li_{1.5}Al_{0.5}Ge_{1.5}(PO₄)_{3,}, and Li_{0.34}La_{0.56}TiO₃, or a combination of Li_{1.5}Al_{0.5}Ge_{1.5}(PO₄)₃, Li_{0.34}La_{0.56}TiO₃, Li_{6.5}La₃Zr_{1.5}Ta_{0.5}O₁₂, and Li_{6.5}La₃Zr_{1.5}Nb_{0.5}O₁₂.

In the present application, the lithium ion conductor is coated on the surface of the lithium nickel manganese oxide positive electrode material to prepare a composite material. Due to the presence of the lithium ion conductor, the diffusion of lithium ions on the surface of lithium nickel manganese oxide is increased, the migration rate of lithium ions is accelerated, the DC resistance of the battery is effectively reduced, and the power performance of the battery is improved.

Preferably, the lithium ion conductor comprises Li₂WO₄ and/or Li_{1.3}Al_{0.3}Ti_{1.7}(PO₄)₃.

Preferably, the chemical formula of the lithium nickel manganese oxide is LiNiₓMn₂₋ₓO₄, where 0.2≤x≤0.8, for example, it is 0.2, 0.3, 0.4, 0.5, 0.6, 0.7, or 0.8, but not limited to the listed values, and other unlisted values within the range of values are also applicable, preferably is LiNi_{0.5}Mn_{1.5}O₄.

Preferably, the composite lithium nickel manganese oxide positive electrode material includes a secondary spherical shape and/or a single crystal shape.

Preferably, when the composite lithium nickel manganese oxide positive electrode material is in a secondary spherical shape, a particle diameter D₅₀ is 18µm to 35µm, for example, it is 18µm, 20µm, 25µm, 30µm, or 35µm, but not limited to the listed values, and other unlisted values within the range of values are also applicable.

Preferably, when the composite lithium nickel manganese oxide positive electrode material is in a single crystal shape, the particle diameter D₅₀ is 5µm to 16µm, for example, it is 5µm, 8µm, 10µm, 15µm, or 16µm, but not limited to the listed values, and other unlisted values within the range of values are also applicable.

In the second aspect, the present application further provides a preparation method of the composite lithium nickel manganese oxide positive electrode material according to the first aspect, and the preparation method includes the following steps:
mixing a lithium source, a nickel source, a manganese source, and a coating raw material to obtain a precursor material; and
sintering the precursor material to obtain the composite lithium nickel manganese oxide positive electrode material.

In the preparation method provided by the present application, the composite lithium nickel manganese oxide positive electrode material can be prepared by mixing the coating raw material with a lithium source, a nickel source, and a manganese source and co-sintering in one step.

Preferably, the lithium source includes any one or a combination of at least two of lithium oxides, hydroxides, nitrates, acetates, or phosphates. Typical but non-limiting combinations include a combination of lithium oxides and hydroxides, a combination of lithium nitrates and acetates, a combination of lithium acetates and phosphates, a combination of lithium hydroxides and nitrates, a combination of lithium nitrates and acetates, a combination of lithium oxides, hydroxides, and nitrates, a combination of lithium oxides, acetates, and phosphates, a combination of lithium nitrates, acetates, and phosphates, a combination of lithium oxides, hydroxides, nitrates, and acetates, a combination of lithium hydroxides, nitrates, acetates, and phosphates, or a combination of lithium oxides, hydroxides, nitrates, acetates, and phosphates.

Preferably, the nickel source includes any one or a combination of at least two of nickel oxides, hydroxides, nitrates, acetates, or phosphates. Typical but non-limiting combinations include a combination of nickel oxides and hydroxides, a combination of nickel nitrates and acetates, a combination of nickel acetates and phosphates, a combination of nickel hydroxides and nitrates, a combination of nickel nitrates and acetates, a combination of nickel oxides, hydroxides, and nitrates, a combination of nickel oxides, acetates, and phosphates, a combination of nickel nitrates, acetates, and phosphates, a combination of nickel oxides, hydroxides, nitrates, and acetates, a combination of nickel hydroxides, nitrates, acetates, and phosphates, or a combination of nickel oxides, hydroxides, nitrates, acetates, and phosphates.

Preferably, the manganese source includes any one or a combination of at least two of manganese oxides, hydroxides, nitrates, acetates, or phosphates. Typical but non-limiting combinations include a combination of manganese oxides and hydroxides, a combination of manganese nitrates and acetates, a combination of manganese acetates and phosphates, a combination of manganese hydroxide and nitrate, a combination of manganese nitrates and acetates, a combination of manganese oxides, hydroxides, and nitrates, a combination of manganese oxides, acetates, and phosphates, a combination of manganese nitrates, acetates, and phosphates, a combination of manganese oxides, hydroxides, nitrates, and acetates, a combination of manganese hydroxides, nitrates, acetates, and phosphates, or a combination of manganese oxides, hydroxides, nitrates, acetates, and phosphates.

Preferably, the coating raw material includes a lithium ion conductor precursor and/or a lithium ion conductor.

Preferably, the lithium ion-conductor precursor includes a Li₂WO₄ precursor and/or a LiCoO₂ precursor.

Preferably, the Li₂WO₄ precursor includes any one or a combination of at least two of W oxides, hydroxides, carbonates, or acetates, for example, it is a combination of W oxides and hydroxides, a combination of W carbonates and acetates, a combination of W oxides and carbonates, a combination of W oxides and acetates, a combination of W hydroxides and carbonates, a combination of W hydroxides and acetates, a combination of W oxides, hydroxides, and carbonates, a combination of W hydroxides, carbonates, and acetates, or a combination of W oxides, hydroxides, carbonates, and acetates, preferably any one or a combination of at least two of WO₃, WO₂, and H₂W₂O₇.

Preferably, the LiCoO₂ precursor includes any one or a combination of at least two of Co oxides, hydroxides, carbonates, or acetates, for example, it is a combination of Co oxides and hydroxides, a combination of Co carbonates and acetates, a combination of Co oxides and carbonates, a combination of Co oxides and acetates, a combination of Co hydroxides and carbonates, a combination of Co hydroxides and acetates, a combination of Co oxides, hydroxides, and carbonates, a combination of Co hydroxides, carbonates, and acetates, or a combination of Co oxides, hydroxides, carbonates, and acetates, preferably any one or a combination of at least two of CoO, CoCO₃, and CoOOH.

Preferably, the lithium ion conductor includes any one or a combination of at least two of Li_{1.3}Al_{0.3}Ti_{1.7}(PO₄)₃, Li_{1.5}Al_{0.5}Ge_{1.5}(PO₄)₃, Li_{0.34}La_{0.56}TiO₃, Li_{6.5}La₃Zr_{1.5}Ta_{0.5}O₁₂, or Li_{6.5}La₃Zr_{1.5}Nb_{0.5}O₁₂, for example, it is a combination of Li_{1.3}Al_{0.3}Ti_{1.7}(PO₄)₃ and Li_{1.5}Al_{0.5}Ge_{1.5}(PO₄)₃, a combination of Li_{1.3}Al_{0.3}Ti_{1.7}(PO₄)₃ and Li_{0.34}La_{0.56}TiO₃, a combination of Li_{1.3}Al_{0.3}Ti_{1.7}(PO₄)₃ and Li_{6.5}La₃Zr_{1.5}Ta_{0.5}O₁₂, a combination of Li_{1.3}Al_{0.3}Ti_{1.7}(PO₄)₃ and Li_{6.5}La₃Zr_{1.5}Nb_{0.5}O₁₂, a combination of Li_{1.5}Al_{0.5}Ge_{1.5}(PO₄)₃ and Li_{0.34}La_{0.56}TiO₃, a combination of Li_{1.5}Al_{0.5}Ge_{1.5}(PO₄)₃ and Li_{6.5}La₃Zr_{1.5}Ta_{0.5}O₁₂, a combination of Li_{1.5}Al_{0.5}Ge_{1.5}(PO₄)₃ and Li_{6.5}La₃Zr_{1.5}Nb_{0.5}O₁₂, a combination of Li_{0.34}La_{0.56}TiO₃ and Li_{6.5}La₃Zr_{1.5}Ta_{0.5}O₁₂, a combination of Li_{6.5}La₃Zr_{1.5}Ta_{0.5}O₁₂ and Li_{6.5}La₃Zr_{1.5}Nb_{0.5}O₁₂, a combination of Li_{1.3}Al_{0.3}Ti_{1.7}(PO₄)₃, Li_{1.5}Al_{0.5}Ge_{1.5}(PO₄)₃, and Li_{0.34}La_{0.56}TiO₃, or a combination of Li_{1.5}Al_{0.5}Ge_{1.5}(PO₄)₃, Li_{0.34}La_{0.56}TiO₃, Li_{6.5}La₃Zr_{1.5}Ta_{0.5}O₁₂, and Li_{6.5}La₃Zr_{1.5}Nb_{0.5}O₁₂.

Preferably, the sintering temperature is 620°C to 880°C, and for example, it is 620°C, 650°C, 700°C, 750°C, 800°C, or 880°C, but not limited to the listed values, and other unlisted values within the range of values are also applicable.

Preferably, the sintering time is 15 hours to 40 hours, for example it is 15 hours, 20 hours, 25 hours, 30 hours, 35 hours, or 40 hours, but not limited to the listed values, and other unlisted values within the range of values are also applicable.

The coating described in the present application includes dot coating and/or planar coating. In the preparation method according to the second aspect of the present application, a temperature condition of 640°C to 670°C and a sintering time of 22 hours to 27 hours are preferred. Li_{1.3}Al_{0.3}Ti_{1.7}(PO₄)₃ can make the positive electrode plate have both "point coating" and "planar coating" appearance, so that the characteristic of rapid lithium ion migration on the surface is provided, and the main material is also protected.

The dot coating means that the coating is dispersed on the surface of the positive electrode material in the form of dots.

The planar coating means that the coating is distributed on the surface of the positive electrode material in a planar manner.

In the third aspect, the present application further provides a preparation method of the composite lithium nickel manganese oxide positive electrode material according to the first aspect, and the preparation method includes the following steps:
mixing lithium nickel manganese oxide and a coating raw material to obtain a mixture; and
sintering the mixture to obtain the composite lithium nickel manganese oxide positive electrode material.

In the preparation method provided by the present application, the coated positive electrode material can also be prepared by mixing the coated raw material with the finished lithium nickel manganese oxide material for sintering.

Preferably, the coating raw material includes a lithium ion conductor precursor and/or a lithium ion conductor.

Preferably, the lithium ion-conductor precursor includes a Li₂WO₄ precursor and/or a LiCoO₂ precursor.

Preferably, the Li₂WO₄ precursor includes any one or a combination of at least two of W oxides, hydroxides, carbonates, or acetates, for example, it is a combination of W oxides and hydroxides, a combination of W carbonates and acetates, a combination of W oxides and carbonates, a combination of W oxides and acetates, a combination of W hydroxides and carbonates, a combination of W hydroxides and acetates, a combination of W oxides, hydroxides, and carbonates, a combination of W hydroxides, carbonates, and acetates, or a combination of W oxides, hydroxides, carbonates, and acetates, preferably any one or a combination of at least two of WO₃, WO₂, and H₂W₂O₇.

Preferably, the LiCoO₂ precursor includes any one or a combination of at least two of Co oxides, hydroxides, carbonates, or acetates, for example, it is a combination of Co oxides and hydroxides, a combination of Co carbonates and acetates, a combination of Co oxides and carbonates, a combination of Co oxides and acetates, a combination of Co hydroxides and carbonates, a combination of Co hydroxides and acetates, a combination of Co oxides, hydroxides, and carbonates, a combination of Co hydroxides, carbonates, and acetates, or a combination of Co oxides, hydroxides, carbonates, and acetates, preferably any one or a combination of at least two of CoO, CoCO₃, and CoOOH.

Preferably, the lithium ion conductor includes any one or a combination of at least two of Li_{1.3}Al_{0.3}Ti_{1.7}(PO₄)₃, Li_{1.5}Al_{0.5}Ge_{1.5}(PO₄)₃, Li_{0.34}La_{0.56}TiO₃, Li_{6.5}La₃Zr_{1.5}Ta_{0.5}O₁₂, or Li_{6.5}La₃Zr_{1.5}Nb_{0.5}O₁₂, for example, it is a combination of Li_{1.3}Al_{0.3}Ti_{1.7}(PO₄)₃ and Li_{1.5}Al_{0.5}Ge_{1.5}(PO₄)₃, a combination of Li_{1.3}Al_{0.3}Ti_{1.7}(PO₄)₃ and Li_{0.34}La_{0.56}TiO₃, a combination of Li_{1.3}Al_{0.3}Ti_{1.7}(PO₄)₃ and Li_{6.5}La₃Zr_{1.5}Ta_{0.5}O₁₂, a combination of Li_{1.3}Al_{0.3}Ti_{1.7}(PO₄)₃ and Li_{6.5}La₃Zr_{1.5}Nb_{0.5}O₁₂, a combination of Li_{1.5}Al_{0.5}Ge_{1.5}(PO₄)₃ and Li_{0.34}La_{0.56}TiO₃, a combination of Li_{1.5}Al_{0.5}Ge_{1.5}(PO₄)₃ and Li_{6.5}La₃Zr_{1.5}Ta_{0.5}O₁₂, a combination of Li_{1.5}Al_{0.5}Ge_{1.5}(PO₄)₃ and Li_{6.5}La₃Zr_{1.5}Nb_{0.5}O₁₂, a combination of Li_{0.34}La_{0.56}TiO₃ and Li_{6.5}La₃Zr_{1.5}Ta_{0.5}O₁₂, a combination of Li_{6.5}La₃Zr_{1.5}Ta_{0.5}O₁₂ and Li_{6.5}La₃Zr_{1.5}Nb_{0.5}O₁₂, a combination of Li_{1.3}Al_{0.3}Ti_{1.7}(PO₄)₃, Li_{1.5}Al_{0.5}Ge_{1.5}(PO₄)₃, and Li_{0.34}La_{0.56}TiO₃, or a combination of Li_{1.5}Al_{0.5}Ge_{1.5}(PO₄)₃, Li_{0.34}La_{0.56}TiO₃, Li_{6.5}La₃Zr_{1.5}Ta_{0.5}O₁₂, and Li_{6.5}La₃Zr_{1.5}Nb_{0.5}O₁₂.

Preferably, the sintering temperature is 350°C to 700°C, for example, it is 350°C, 400°C, 450°C, 500°C, 550°C, 600°C, or 700°C, but not limited to the listed values, and other unlisted values within the range of values are also applicable.

Preferably, the sintering time is 6 hours to 25 hours, for example it is 6 hours, 10 hours, 15 hours, 20 hours, or 25 hours, but not limited to the listed values, and other unlisted values within the range of values are also applicable.

The coating described in the present application includes dot coating and/or planar coating. In the preparation method according to the third aspect of the present application, a sintering temperature of 640°C to 660°C and a sintering time of 22 hours to 26 hours are preferred. Li_{1.3}Al_{0.3}Ti_{1.7}(PO₄)₃ can make the positive electrode plate have both "point coating" and "planar coating" appearance, so that the characteristic of rapid lithium ion migration on the surface is provided, and the main material is also protected.

In the fourth aspect, the present application further provides a lithium ion battery positive electrode plate including the composite lithium nickel manganese oxide positive electrode material according to the first aspect.

The numerical ranges described in the present application include not only the abovementioned exemplified point values, but also any point values between the abovementioned numerical ranges that are not exemplified. Due to space limitations and for the sake of brevity, the present application will not exhaustively list the specific point values included in the range.

Compared to the related art, beneficial effects of the present application include the following.

(1) In the composite lithium nickel manganese oxide positive electrode material provided by the embodiments of the present application, a lithium ion conductor with fast lithium ion transmission data capability is included. The lithium ion conductor is coated on the surface of lithium nickel manganese oxide, so the dynamic performance of the material is effectively improved, and the DC internal resistance of the battery is reduced.

(2) In the embodiments of the present application, two preparation methods of the composite lithium nickel manganese oxide positive electrode material are provided. In this way, the coating of the lithium ion conductor with fast lithium ion data transmission performance is effectively provided, and the stability of the material is improved. Further, the material exhibits good electrochemical performance, the preparation process is simple, and the production efficiency is high.

Other aspects will become apparent after the detailed description is read and understood.

### DESCRIPTION OF THE EMBODIMENTS

In the conventional method involving lithium nickel manganese oxide coating a lithium ion conductor provided by the related art, solution co-precipitation is included, and a zirconium-containing lithium ion conductor such as Li₂ZrO₃ or Li₅La_{3.5}Zr_{1.5}O₁₀ is obtained by reacting zirconia with a lithium source are used. For the lithium nickel manganese oxide positive electrode material prepared by the above method, in order to reduce the side reaction between the positive electrode material and the electrolyte, the crystal grain size of the synthesized material is relatively large most of the time. This will slow down the migration of lithium ions inside the material, resulting in poor kinetic performance and poor direct-current (DC) internal resistance and rate performance at low temperatures.

With an aim to solve the above technical problems, the present application provides a composite lithium nickel manganese oxide positive electrode material, a preparation method thereof, and a lithium ion battery positive electrode plate capable of effectively improving the kinetic performance of a material and reducing the DC internal resistance of a battery by coating a lithium ion conductor with fast lithium ion data transmission performance on a surface.

The present application is further described in detail through the specific embodiments. However, the following examples are only simple examples of the present application, and do not represent or limit the protection scope of the present application, and the protection scope of the present application shall be determined by the claims.

### Example 1

This example provides a composite lithium nickel manganese oxide positive electrode material. The composite lithium nickel manganese oxide positive electrode material includes lithium nickel manganese oxide LiNi_{0.5}Mn_{1.5}O₄ coated with a lithium ion conductor Li₂WO₄, and a mass ratio of the lithium ion conductor Li₂WO₄ to the lithium nickel manganese oxide LiNi_{0.5}Mn_{1.5}O₄ is 0.5: 99.5.

A preparation method of the composite lithium nickel manganese oxide positive electrode material includes the following steps. Ni(NO₃)₂, Mn(NO₃)₄, LiNO₃, and WO₃ are mixed, and a precursor material is obtained. The obtained precursor material is sintered at a temperature of 700°C for 25 hours, and the composite lithium nickel manganese oxide positive electrode material is obtained. The obtained composite lithium nickel manganese oxide positive electrode material is in a secondary sphere shape with a particle diameter D₅₀ of 25 µm, and the coating state is dot coating and planar coating.

### Example 2

This example provides a composite lithium nickel manganese oxide positive electrode material. The composite lithium nickel manganese oxide positive electrode material includes lithium nickel manganese oxide LiNi_{0.5}Mn_{1.5}O₄ coated with a lithium ion conductor Li_{1.3}Al_{0.3}Ti_{1.7}(PO₄)₃, and the mass ratio of the lithium ion conductor Li_{1.3}Al_{0.3}Ti_{1.7}(PO₄)₃ to the lithium nickel manganese oxide LiNi_{0.5}Mn_{1.5}O₄ is 0.8: 99.2.

The preparation method of the composite lithium nickel manganese oxide positive electrode material includes the following steps. Ni(OH)₂, Mn(OH)₄, LiOH, and Li_{1.3}Al_{0.3}Ti_{1.7}(PO₄)₃ are mixed, and a precursor material is obtained. The obtained precursor material is sintered at a temperature of 650°C for 35 hours, and the composite lithium nickel manganese oxide positive electrode material is obtained. The obtained composite lithium nickel manganese oxide positive electrode material is in a single crystal shape with a particle diameter D₅₀ of 10 µm, and the coating state is dot coating.

### Example 3

This example provides a composite lithium nickel manganese oxide positive electrode material. The composite lithium nickel manganese oxide positive electrode material includes lithium nickel manganese oxide LiNi_{0.5}Mn_{1.5}O₄ coated with a lithium ion conductor LiCoO₂, and the mass ratio of the lithium ion conductor LiCoO₂ to the lithium nickel manganese oxide LiNi_{0.5}Mn_{1.5}O₄ is 0.2: 99.8.

The preparation method of the composite lithium nickel manganese oxide positive electrode material includes the following steps. NiO, MnO, Li₂O, and CoO are mixed, and a precursor material is obtained. The obtained precursor material is sintered at a temperature of 880°C for 15 hours, and the composite lithium nickel manganese oxide positive electrode material is obtained. The obtained composite lithium nickel manganese oxide positive electrode material is in a secondary spherical shape with a particle diameter D₅₀ of 18 µm, and the coating state is planar coating.

### Example 4

This example provides a composite lithium nickel manganese oxide positive electrode material. The composite lithium nickel manganese oxide positive electrode material includes lithium nickel manganese oxide LiNi_{0.5}Mn_{1.5}O₄ coated with a lithium ion conductor, the lithium ion conductor is Li_{1.5}Al_{0.5}Ge_{1.5}(PO₄)₃ and Li_{0.34}La_{0.56}TiO₃ with a mass ratio of 1:1, and the mass ratio of the lithium ion conductor to the lithium nickel manganese oxide LiNi_{0.5}Mn_{1.5}O₄ is 1: 99.

The preparation method of the composite lithium nickel manganese oxide positive electrode material includes the following steps. LiNi_{0.5}Mn_{1.5}O₄, Li_{1.5}Al_{0.5}Ge_{1.5}(PO₄)₃, and Li_{0.34}La_{0.56}TiO₃ are mixed, and a mixture is obtained. The obtained mixture is sintered at a temperature of 350°C for 25 hours, and the composite lithium nickel manganese oxide positive electrode material is obtained. The obtained composite lithium nickel manganese oxide positive electrode material is in a secondary spherical shape with a particle diameter D₅₀ of 35 µm, and the coating state is dot coating.

### Example 5

This example provides a composite lithium nickel manganese oxide positive electrode material. The composite lithium nickel manganese oxide positive electrode material includes lithium nickel manganese oxide LiNi_{0.5}Mn_{1.5}O₄ coated with a lithium ion conductor, the lithium ion conductor is Li_{6.5}La₃Zr_{1.5}Ta_{0.5}O₁₂ and Li_{6.5}La₃Zr_{1.5}Nb_{0.5}O₁₂ with a mass ratio of 1:1, and the mass ratio of the lithium ion conductor to the lithium nickel manganese oxide LiNi_{0.5}Mn_{1.5}O₄ is 0.01: 99.99.

The preparation method of the composite lithium nickel manganese oxide positive electrode material includes the following steps. LiNi_{0.5}Mn_{1.5}O₄ and Li_{6.5}La₃Zr_{1.5}Ta_{0.5}O₁₂ or Li_{6.5}La₃Zr_{1.5}Nb_{0.5}O₁₂ are mixed, and a mixture is obtained. The obtained mixture is sintered at a temperature of 700°C for 6 hours, and the composite lithium nickel manganese oxide positive electrode material is obtained. The obtained composite lithium nickel manganese oxide positive electrode material is in a single crystal shape with a particle diameter D₅₀ of 5 µm, and the coating state is dot coating and planar coating.

### Example 6

This example provides a composite lithium nickel manganese oxide positive electrode material. The composite lithium nickel manganese oxide positive electrode material includes lithium nickel manganese oxide LiNi_{0.5}Mn_{1.5}O₄ coated with a lithium ion conductor Li_{1.3}Al_{0.3}Ti_{1.7}(PO₄)₃, and the mass ratio of the lithium ion conductor Li_{1.3}Al_{0.3}Ti_{1.7}(PO₄)₃ to the lithium nickel manganese oxide LiNi_{0.5}Mn_{1.5}O₄ is 0.8: 99.2.

The preparation method of the composite lithium nickel manganese oxide positive electrode material includes the following steps. Ni(OH)₂, Mn(OH)₄, LiOH, and Li_{1.3}Al_{0.3}Ti_{1.7}(PO₄)₃ are mixed, and a precursor material is obtained. The obtained precursor material is sintered at a temperature of 620°C for 40 hours, and the composite lithium nickel manganese oxide positive electrode material is obtained. The obtained composite lithium nickel manganese oxide positive electrode material is in a single crystal shape with a particle diameter D₅₀ of 10 µm, and the coating state is dot coating.

### Example 7

This example provides a composite lithium nickel manganese oxide positive electrode material, and except that the chemical formula of the lithium nickel manganese oxide is LiNi_{0.2}Mn_{1.8}O₄, other components and the preparation method are the same as those in Example 1.

### Example 8

This example provides a composite lithium nickel manganese oxide positive electrode material, and except that the chemical formula of the lithium nickel manganese oxide is LiNi_{0.8}Mn_{1.2}O₄, other components and the preparation method are the same as those in Example 1.

### Example 9

This example provides a composite lithium nickel manganese oxide positive electrode material, and the composition and content of the composite lithium nickel manganese oxide positive electrode material are the same as those in Example 1.

The preparation method of the composite lithium nickel manganese oxide positive electrode material includes the following steps.

LiNi_{0.5}Mn_{1.5}O₄ and WO₃ are mixed, and a mixture is obtained. The obtained mixture is sintered at a temperature of 400°C for 15 hours, and the composite lithium nickel manganese oxide positive electrode material is obtained. The obtained composite lithium nickel manganese oxide positive electrode material is in a secondary spherical shape with a particle diameter D₅₀ of 20 µm, and the coating state is dot coating.

### Example 10

This example provides a composite lithium nickel manganese oxide positive electrode material, and except that the coating raw material is WO₂, other components and the preparation method are the same as those in Example 1.

### Example 11

This example provides a composite lithium nickel manganese oxide positive electrode material, and except that the coating raw material is WO₂, other components and the preparation method are the same as those in Example 8.

### Example 12

This example provides a composite lithium nickel manganese oxide positive electrode material, and except that the coating raw material is H₂W₂O₇, other components and the preparation method are the same as those in Example 1.

### Example 13

This example provides a composite lithium nickel manganese oxide positive electrode material, and except that the coating raw material is H₂W₂O₇, other components and the preparation method are the same as those in Example 8.

### Example 14

This example provides a composite lithium nickel manganese oxide positive electrode material, and the composition and content of the composite lithium nickel manganese oxide positive electrode material are the same as those in Example 2.

The preparation method of the composite lithium nickel manganese oxide positive electrode material includes the following steps. LiNi_{0.5}Mn_{1.5}O₄ and Li_{1.3}Al_{0.3}Ti_{1.7}(PO₄)₃ are mixed, and a mixture is obtained. The obtained mixture is sintered at a temperature of 400°C for 15 hours, and the composite lithium nickel manganese oxide positive electrode material is obtained. The obtained composite lithium nickel manganese oxide positive electrode material is in a secondary spherical shape with a particle diameter D₅₀ of 18 µm, and the coating state is dot coating.

### Example 15

This example provides a composite lithium nickel manganese oxide positive electrode material, and except that the lithium ion conductor is Li_{1.5}Al_{0.5}Ge_{1.5}(PO₄)₃, other components and contents are the same as those in Example 1.

The preparation method of the composite lithium nickel manganese oxide positive electrode material includes the following steps. Ni(NO₃)₂, Mn(NO₃)₄, LiNO₃, and Li_{1.5}Al_{0.5}Ge_{1.5}(PO₄)₃ are mixed, and a precursor material is obtained. The obtained precursor material is sintered at a temperature of 700°C for 25 hours, and the composite lithium nickel manganese oxide positive electrode material is obtained. The obtained composite lithium nickel manganese oxide positive electrode material is in a secondary sphere shape with a particle diameter D₅₀ of 25 µm, and the coating state is dot coating and planar coating.

### Example 16

This example provides a composite lithium nickel manganese oxide positive electrode material, and except that the lithium ion conductor is Li_{0.34}La_{0.56}TiO₃, other components and contents are the same as those in Example 1.

The preparation method of the composite lithium nickel manganese oxide positive electrode material includes the following steps. Ni(NO₃)₂, Mn(NO₃)₄, LiNO₃, and Li_{0.34}La_{0.56}TiO₃ are mixed, and a precursor material is obtained. The obtained precursor material is sintered at a temperature of 700°C for 25 hours, and the composite lithium nickel manganese oxide positive electrode material is obtained. The obtained composite lithium nickel manganese oxide positive electrode material is in a secondary sphere shape with a particle diameter D₅₀ of 25 µm, and the coating state is dot coating and planar coating.

### Example 17

This example provides a composite lithium nickel manganese oxide positive electrode material, and except that the lithium ion conductor is Li_{6.5}La₃Zr_{1.5}Ta_{0.5}O₁₂, other components and contents are the same as those in Example 1.

The preparation method of the composite lithium nickel manganese oxide positive electrode material includes the following steps. Ni(NO₃)₂, Mn(NO₃)₄, LiNO₃, and Li_{6.5}La₃Zr_{1.5}Ta_{0.5}O₁₂ are mixed, and a precursor material is obtained. The obtained precursor material is sintered at a temperature of 700°C for 25 hours, and the composite lithium nickel manganese oxide positive electrode material is obtained. The obtained composite lithium nickel manganese oxide positive electrode material is in a secondary sphere shape with a particle diameter D₅₀ of 25 µm, and the coating state is dot coating and planar coating.

### Example 18

This example provides a composite lithium nickel manganese oxide positive electrode material, and except that the lithium ion conductor is Li_{6.5}La₃Zr_{1.5}Nb_{0.5}O₁₂, other components and contents are the same as those in Example 1.

The preparation method of the composite lithium nickel manganese oxide positive electrode material includes the following steps. Ni(NO₃)₂, Mn(NO₃)₄, LiNO₃, and Li_{6.5}La₃Zr_{1.5}Nb_{0.5}O₁₂ are mixed, and a precursor material is obtained. The obtained precursor material is sintered at a temperature of 700°C for 25 hours, and the composite lithium nickel manganese oxide positive electrode material is obtained. The obtained composite lithium nickel manganese oxide positive electrode material is in a secondary sphere shape with a particle diameter D₅₀ of 25 µm, and the coating state is dot coating and planar coating.

### Comparative Example 1

This comparative example provides the lithium nickel manganese oxide LiNi_{0.5}Mn_{1.5}O₄ in Example 1.

The preparation method of the lithium nickel manganese oxide includes the following steps. Ni(NO₃)₂, Mn(NO₃)₄, and LiNO₃ are mixed, and a precursor material is obtained. The obtained precursor material is sintered at a temperature of 700°C for 25 hours, and the lithium nickel manganese oxide LiNi_{0.5}Mn_{1.5}O₄ is obtained.

### Comparative Example 2

This comparative example provides a composite lithium nickel manganese oxide positive electrode material, and except that the mass ratio of Li₂WO₄ to lithium nickel manganese oxide LiNi_{0.5}Mn_{1.5}O₄ is 1.5: 98.5, other components and the preparation method are the same as those in Example 1.

The positive electrode material obtained in Examples 1 to 18 and Comparative Examples 1 to 2 is mixed with conductive carbon black, conductive carbon tubes, nitrogen methyl pyrrolidone solvent, and polyvinylidene fluoride at a mass ratio of 99: 1: 0.5: 40: 1, and a positive electrode plate is prepared. The resulting positive electrode plate is assembled into a 1Ah pouch battery. After formation and aging, the pouch battery is charged to 4.9V at a rate of 0.33A at 25°C and discharged to 3.1V at 0.33A to obtain a capacity C₀. After that, the battery is fully charged to 4.9V.

Low-temperature direct-current resistance (DCR) test: the battery is placed in a 0°C constant temperature oven and kept for 1 hour, the state of charge (SOC) of the battery is adjusted to 50% SOC, and then the battery is discharged at a current density of 4C (based on C₀) for 30s. The voltage difference before and after discharge divided by the current density is the DCR value of the battery at the temperature and SOC.

Low-temperature capacity retention: the battery is placed in a -20°C constant temperature oven and kept for 1 hour and discharged to 3.1V with a current of 0.33A to obtain a capacity C₁, and C₁/ C₀ is the low-temperature capacity retention of the battery.

Cycle capacity retention: at 25°C, the battery is charged and discharged in a 0.33A charge/1A discharge cycle. The cycle voltage range is from 3.1V to 4.9V. The first 1A discharge capacity is recorded as C₂, the 200^{th} 1A discharge capacity is recorded as C₃, and C₃/ C₂ is the cycle capacity retention of the battery.

Calculation of energy density: C₀×discharge platform voltage/battery weight.

The above results are shown in Table 1.

**Table 1**

| Test No. | Low temperature DCR (mΩ) | Low-temperature capacity retention (%) | Cycle capacity retention for 200 cycles (%) | Energy density (Wh/kg) |
|---|---|---|---|---|
| Example 1 | 204 | 94 | 89 | 236 |
| Example 2 | 153 | 98 | 93 | 243 |
| Example 3 | 236 | 88 | 83 | 207 |
| Example 4 | 219 | 89 | 86 | 219 |
| Example 5 | 254 | 82 | 91 | 198 |
| Example 6 | 163 | 96 | 94 | 232 |
| Example 7 | 277 | 82 | 79 | 183 |
| Example 8 | 183 | 95 | 92 | 241 |
| Example 9 | 209 | 92 | 84 | 224 |
| Example 10 | 212 | 90 | 85 | 208 |
| Example 11 | 167 | 96 | 88 | 238 |
| Example 12 | 188 | 90 | 87 | 229 |
| Example 13 | 172 | 97 | 94 | 251 |
| Example 14 | 127 | 98 | 95 | 254 |
| Example 15 | 192 | 94 | 91 | 238 |
| Example 16 | 198 | 93 | 92 | 233 |
| Example 17 | 184 | 95 | 90 | 241 |
| Example 18 | 187 | 92 | 88 | 234 |
| Comparative Example 1 | 533 | 65 | 49 | 168 |
| Comparative Example 2 | 367 | 73 | 76 | 149 |

The following can be learned from the results shown in Table 1.
(1) From Example 1 to Example 6, it can be seen that in the composite lithium nickel manganese oxide positive electrode material, the preparation method thereof, and the lithium ion battery positive electrode plate provided by the present application, by coating the lithium ion conductor with fast lithium ion data transmission performance on the surface, the dynamic performance of the material is effectively improved, the DC internal resistance of the battery is reduced, and the prepared positive electrode material has low DC internal resistance, high capacity, high capacity retention, and high energy density.
(2) By comparing Example 1 to Examples 7 and 8, it can be seen that in the lithium nickel manganese oxide LiNiₓMn₂₋ₓO₄, where 0.2≤x≤0.8, by coating the lithium ion conductor with fast lithium ion data transmission performance on the surface, the dynamic performance of the material is effectively improved, the DC internal resistance of the battery is reduced, and the prepared positive electrode material has low DC internal resistance, high capacity, high capacity retention, and high energy density.
(3) By comparing Example 1 to Example 9 and Example 2 to Example 13, it can be seen that in both the preparation methods provided by the present application, composite lithium nickel manganese oxide positive electrode material with low resistance and high rate performance can be prepared.
(4) By comparing Example 1 to Example 10 to Example 13, it can be seen that the WO₃, WO₂, or H₂W₂O₇ provided by the present application can be used as a coating raw material to prepare a composite lithium nickel manganese oxide positive electrode material with low resistance and high rate performance.
(5) By comparing Example 1 to Example 15 to Example 18, it can be seen that the lithium ion conductor Li₂WO₄, LiCoO₂, Li_{1.3}Al_{0.3}Ti_{1.7}(PO₄)₃, Li_{1.5}Al_{0.5}Ge_{1.5}(PO₄)₃, Li_{0.34}La_{0.56}TiO₃, Li_{6.5}La₃Zr_{1.5}Ta_{0.5}O₁₂, or Li_{6.5}La₃Zr_{1.5}Nb_{0.5}O₁₂ provided by the present application can be used as a coating material to prepare a composite lithium nickel manganese oxide positive electrode material with low resistance and high rate performance.
(6) By comparing Example 1 to Comparative Example 1, it can be seen that when the lithium ion conductor is not coated, the prepared positive electrode material has high low-temperature resistance and low rate performance. This shows that the lithium ion conductor provided by the present application acting as a coating material is conducive to the preparation of a positive electrode material with low low-temperature resistance and high rate performance, so that the stability of the battery is enhanced, and the cycle performance of the battery is improved.
(7) By comparing Example 1 to Comparative Example 2, it can be seen that when the mass ratio of the coated lithium ion conductor to the lithium nickel manganese oxide is not in the range of (0.01-1): (99.99-99), the prepared positive electrode material has high low-temperature resistance and low rate performance. This shows that the content of the lithium ion conductor provided by the present application is beneficial to the preparation of the positive electrode material with high low-temperature resistance and low rate performance, so that the stability of the battery is enhanced, and the cycle performance of the battery improved.

The specific embodiments described above further describe the purpose, technical solutions, and beneficial effects of the present application in detail. It should be understood that the above description is only specific examples of the present application and is not intended to limit the present application. Any modifications, equivalent replacements, improvements, etc. made within the spirit and principles of the present application shall be included within the protection scope of the present application.

## Claims

1. A composite lithium nickel manganese oxide positive electrode material, comprising lithium nickel manganese oxide coated with a lithium ion conductor,
wherein a mass ratio of the lithium ion conductor to the lithium nickel manganese oxide is (0.01 to 1): (99.99 to 99),
wherein the lithium ion conductor comprises a metal salt of lithium, and a lithium ion diffusion rate of the lithium ion conductor is greater than 10⁻⁵ mS/cm.

2. The composite lithium nickel manganese oxide positive electrode material according to claim 1, wherein the lithium ion conductor comprises any one or a combination of at least two of Li₂WO₄, LiCoO₂, Li_{1.3}Al_{0.3}Ti_{1.7}(PO₄)₃, Li_{1.5}Al_{0.5}Ge_{1.5}(PO₄)₃, Li_{0.34}La_{0.56}TiO₃, Li_{6.5}La₃Zr_{1.5}Ta_{0.5}O₁₂, and Li_{6.5}La₃Zr_{1.5}Nb_{0.5}O₁₂.

3. The composite lithium nickel manganese oxide positive electrode material according to claim 2, wherein the lithium ion conductor comprises Li₂WO₄ and/or Li_{1.3}Al_{0.3}Ti_{1.7}(PO₄)₃.

4. The composite lithium nickel manganese oxide positive electrode material according to any one of claims 1 to 3, wherein a chemical formula of the lithium nickel manganese oxide is LiNiₓMn₂₋ₓO₄, where 0.2≤x≤0.8, and preferably LiNi_{0.5}Mn_{1.5}O₄.

5. The composite lithium nickel manganese oxide positive electrode material according to any one of claims 1 to 4, wherein the composite lithium nickel manganese oxide positive electrode material comprises a secondary spherical shape and/or a single crystal shape,
preferably, when the composite lithium nickel manganese oxide positive electrode material is in the secondary spherical shape, a particle diameter D₅₀ of the composite lithium nickel manganese oxide positive electrode material is 18 µm to 35 µm, and
preferably, when the composite lithium nickel manganese oxide positive electrode material is in the single crystal shape, a particle diameter D₅₀ of the composite lithium nickel manganese oxide positive electrode material is 5 µm to 16 µm.

6. A preparation method of the composite lithium nickel manganese oxide positive electrode material according to any one of claims 1 to 5, comprising
mixing a lithium source, a nickel source, a manganese source, and a coating raw material to obtain a precursor material; and
sintering the precursor material to obtain the composite lithium nickel manganese oxide positive electrode material.

7. The preparation method according to claim 6, wherein the lithium source comprises any one or a combination of at least two of lithium oxides, hydroxides, nitrates, acetates, and phosphates.

8. The preparation method according to claim 6 or 7, wherein the nickel source comprises any one or a combination of at least two of nickel oxides, hydroxides, nitrates, acetates, and phosphates.

9. The preparation method according to any one of claims 6 to 8, wherein the manganese source comprises any one or a combination of at least two of manganese oxides, hydroxides, nitrates, acetates, and phosphates.

10. The preparation method according to any one of claims 6 to 10, wherein the coating raw material comprises a lithium ion conductor precursor and/or the lithium ion conductor,
preferably, the lithium ion-conductor precursor comprises a Li₂WO₄ precursor and/or a LiCoO₂ precursor,
preferably, the Li₂WO₄ precursor comprises W oxides, hydroxides, carbonates, or acetates and preferably any one or a combination of at least two of WO₃, WO₂, and H₂W₂O₇,
preferably, the LiCoO₂ precursor comprises Co oxides, hydroxides, carbonates, or acetates and preferably any one or a combination of at least two of CoO, CoCO₃ and CoOOH, and
preferably, the lithium ion conductor comprises any one or a combination of at least two of Li_{1.3}Al_{0.3}Ti_{1.7}(PO₄)₃, Li_{1.5}Al_{0.5}Ge_{1.5}(PO₄)₃, Li_{0.34}La_{0.56}TiO₃, Li_{6.5}La₃Zr_{1.5}Ta_{0.5}O₁₂, and Li_{6.5}La₃Zr_{1.5}Nb_{0.5}O₁₂.

11. The preparation method according to any one of claims 6 to 10, wherein a sintering temperature is 620°C to 880°C, and
preferably, a sintering time is 15 hours to 40 hours.

12. A preparation method of the composite lithium nickel manganese oxide positive electrode material according to any one of claims 1 to 5, comprising:
mixing lithium nickel manganese oxide and a coating raw material to obtain a mixture; and
sintering the mixture to obtain the composite lithium nickel manganese oxide positive electrode material.

13. The preparation method according to claim 12, wherein the coating raw material comprises a lithium ion conductor precursor and/or the lithium ion conductor.

14. The preparation method according to claim 13, wherein the lithium ion-conductor precursor comprises a Li₂WO₄ precursor and/or a LiCoO₂ precursor.

15. The preparation method according to claim 14, wherein the Li₂WO₄ precursor comprises any one or a combination of at least two W oxides, hydroxides, carbonates, and acetates and preferably any one or a combination of at least two of WO₃, WO₂, and H₂W₂O₇, and
preferably, the LiCoO₂ precursor comprises any one or a combination of at least two comprises Co oxides, hydroxides, carbonates, and acetates and preferably any one or a combination of at least two of CoO, CoCO₃, and CoOOH.

16. The preparation method according to claim 13, wherein the lithium ion conductor comprises any one or a combination of at least two of Li_{1.3}Al_{0.3}Ti_{1.7}(PO₄)₃, Li_{1.5}Al_{0.5}Ge_{1.5}(PO₄)₃, Li_{0.34}La_{0.56}TiO₃, Li_{6.5}La₃Zr_{1.5}Ta_{0.5}O₁₂, and Li_{6.5}La₃Zr_{1.5}Nb_{0.5}O₁₂.

17. The preparation method according to any one of claims 12 to 16, wherein a sintering temperature is 350°C to 700°C, and
preferably, a sintering time is 6 hours to 25 hours.

18. A lithium ion battery positive electrode plate, comprising the composite lithium nickel manganese oxide positive electrode material according to any one of claims 1 to 5.
